Europäisches Patentamt

European Patent Office

Office européen des brevets

(19)

(11) **EP 1 519 496 A1**

(12) **EUROPEAN PATENT APPLICATION**
published in accordance with Art. 158(3) EPC

(43) Date of publication:
**30.03.2005 Bulletin 2005/13**

(51) Int Cl.⁷: **H04B 7/26**

(21) Application number: **03761778.4**

(22) Date of filing: **24.06.2003**

(86) International application number:
**PCT/JP2003/007955**

(87) International publication number:
**WO 2004/004164 (08.01.2004 Gazette 2004/02)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.06.2002 JP 2002189875**

(71) Applicant: **MATSUSHITA ELECTRIC INDUSTRIAL CO., LTD.**
**Kadoma-shi, Osaka 571-8501 (JP)**

(72) Inventors:
• **MIYA, Kazuyuki**
  **Kawasaki-shi, Kanagawa 215-0021 (JP)**
• **SUZUKI, Hidetoshi**
  **Yokosuka-shi, Kanagawa 239-0847 (JP)**

(74) Representative: **Grünecker, Kinkeldey, Stockmair & Schwanhäusser Anwaltssozietät**
**Maximilianstrasse 58**
**80538 München (DE)**

(54) **TRANSMISSION POWER CONTROL METHOD AND BASE STATION DEVICE**

(57) A division section (205) divides the output signal of a demodulating section (204) into data and control signals such as a CQI signal and an ACK/NACK signal. A transmission power control section (261) controls the gain of an amplifying section (262) by adding an offset to the transmission power of a transmission power control section (258) when the destination apparatus is not in an HO state. Also, the transmission power control section (261) controls the gain of the amplifying section (262) based on the CQI signal when the destination apparatus is in an HO state. Furthermore, the transmission power control section (261) adds a compensation value input from a compensation value setting section (260) as set to the transmission power, for example, at retransmission. By this configuration, it is possible to improve the system throughput of the wireless communication system providing an HSDPA service by optimally controlling the transmission power of an A-DPCH.

FIG.5

**Description**

Technical Field

The present invention relates to a transmission power control method and a base station apparatus for use in wireless communication systems for enabling high speed transmission of downlink packets. More particularly, the present invention is suitable for use in HSDPA based on W-CDMA technology.

Background Art

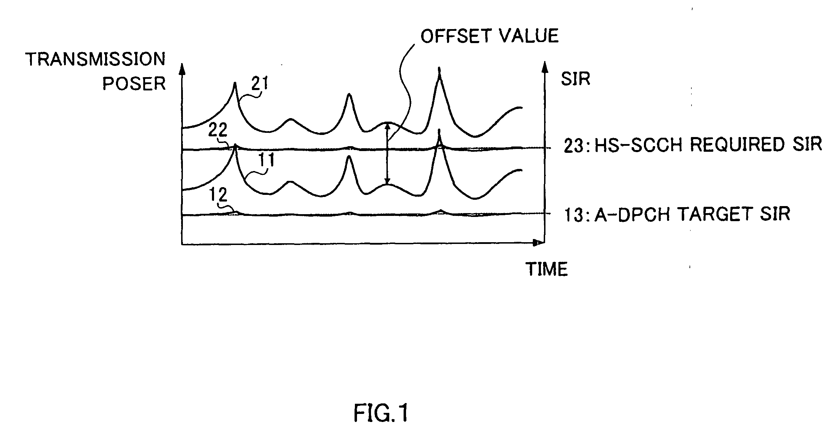

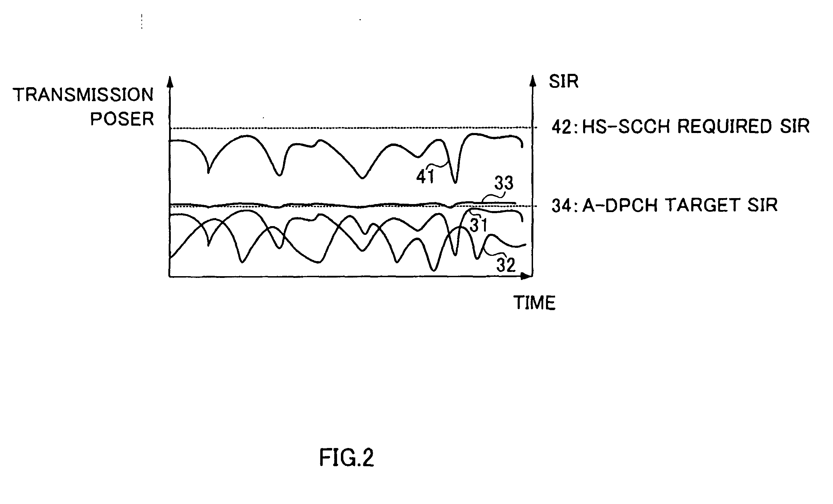

In the field of wireless communication systems, HSDPA (High Speed Downlink Packet Access) has been proposed for enabling high speed packet transmission on downlink channels to a plurality of communication terminal apparatuses sharing high speed large-capacity downlink channels. The HSDPA uses a plurality of channels including HS-PDSCH (High Speed - Physical Downlink Shared Channel), HS-SCCH (Shared Control Channel of HS-PDSCH) and A-DPCH (Associated-Dedicated Physical Channel for HS-PDSCH). Incidentally, A-DPCH is a DPCH channel provided as an associated channel for use in HSDPA transmission, and the channel configuration and the hand over control scheme thereof are same as those of the DPCH.
HS-PDSCH is a shared channel for use in transmitting packets in the downlink direction. HS-SCCH is also a shared channel in the downlink direction for transmitting information for controlling the resource allocation (TFRI : Transport-format and Resource related Information), information for controlling H-ARQ (Hybrid-Automatic Repeat Request) and so forth.
A-DPCH is a dedicated associated channel in the downlink direction and the upstream direction for transmitting pilot signals, TPC commands, and, in addition to these, ACK signals or NACK signals, and CQI (Channel Quality Indicator) signals are transmitted in the uplink direction. An ACK signal is a signal to indicate that a high speed packet transmitted from a base station apparatus on the HS-PDSCH is decoded correctly by a communication terminal apparatus, and a NACK signal is a signal to indicate that a high speed packet transmitted from a base station apparatus on the HS-PDSCH is erroneously demodulated by a communication terminal apparatus. Also, a CQI signal is a signal to indicate the modulation schemes of packet data and the encoding rates supported at the communication terminal apparatuses.
In what follows, the relationship between the reception SIRs (Signal to Interference Ratios) of A-DPCH and HS-SCCH will be explained with reference to FIG.1 and FIG.2. FIG.1 shows a case where an HO (Hand Over) state does not occur, and FIG.2 shows a case where an HO state occurs. In this case, the HO state refers to the where a communication is established by concurrent connections with a plurality of base stations or sectors, i.e., a state generally known as the soft hand over (SHO).
As illustrated in FIG.1, the transmission power of an A-DPCH is controlled by the known closed loop transmission power control scheme in order that the reception SIR 12 of the A-DPCH achieve the target SIR 13.
Since the required SIR 23 of the HS-SCCH differs from the target SIR 13 of the A-DPCH, the transmission power 21 of the HS-SCCH is determined by adding an offset to the transmission power 11 of the A-DPCH. By this configuration, when an HO state does not occur, the reception SIR 22 is maintained approximately at the required SIR 23.
As for the DPCH, when an HO state occurs, the transmission power is controlled in order that the SIR obtained by combining a plurality of the received signals achieve the target SIR. As a result, it is possible to reduce the transmission power by the diversity gain as compared with the case where an HO state does not occur. In accordance with a prior art technique, when an HO state occurs, similar to the DPCH, the transmission power of the A-DPCH is controlled to achieve the required quality after a plurality of received signals are combined.
On the other hand, in the case of HS-PDSCH and HS-SCCH, because optimum adaptive MCS (Modulation and Coding Scheme: combination of the modulation scheme and the error-correction code) selection in accordance with the condition of the transmission channel and an H-ARQ control are performed, HHO (Hard Hand Over) is employed rather than SHO (Soft Hand Over), so that the signals are transmitted constantly from only one base station apparatus (hereinafter referred to as a "primary base station apparatus" which transmits signals on an HS-SCCH).
Accordingly, if the above power offset value is determined based on the transmission power of an A-DPCH when the HO state does not occur, the reception SIR of the HS-SCCH comes short of the required SIR to degrade the quality of the received signals when the HO state occurs, increasing the number of retransmissions and degrading the system throughput.
For example, in FIG. 2, if the communication terminal apparatus is communicating a base station apparatus A and a base station apparatus B, the communication terminal apparatus generates a TPC command in order that the SIR 33 obtained by combining the reception SIR 31 of the A-DPCH of the base station apparatus A and the reception SIR 32 of the A-DPCH of the base station apparatus B achieve the target SIR 34. Accordingly, the reception SIR 31 of the A-DPCH of the base station apparatus A becomes lower than the target SIR 34.

At this time, if the base station apparatus A is the primary base station apparatus, the transmission power of the HS-SCCH is determined by adding an offset to the transmission power of the A-DPCH of the base station apparatus A and therefore the reception SIR 41 of the HS-SCCH falls short of the required SIR 42 when an HO state occurs.

On the other hand, if the above power offset value is determined to be sufficiently large so that the reception SIR of the HS-SCCH reaches the required SIR even when an HO state occurs, an excessive power is used to transmit signals on the HS-SCCH when an HO state does not occur on the A-DPCH, and there is a problem that the transmission power as a limited wireless resource is excessively consumed to decrease the system throughput.

Disclosure of Invention

It is an object of the present invention to provide a transmission power control method and a base station apparatus in a wireless communication system for providing an HSDPA service in which the system throughput is improved.

This object is accomplished by controlling the transmission power of an HS-SCCH to the communication terminal apparatus receiving the HSDPA service based on the CQI signal at least when an HO state occurs. Incidentally, in relation to the present invention, the HSDPA service refers to packet communication services implemented by HSDPA transmission.

Brief Description of Drawings

FIG.1 is a view for explaining the relationship between the reception SIRs of A-DPCH and HS-SCCH;
FIG.2 is a view for explaining the relationship between the reception SIRs of A-DPCH and HS-SCCH;
FIG.3 is a system configuration diagram showing an embodiment of the present invention;
FIG.4 is a block diagram showing the configuration of a control station apparatus in accordance with the embodiment of the present invention;
FIG.5 is a block diagram showing the configuration of a base station apparatus in accordance with the embodiment of the present invention; and
FIG.6 is a block diagram showing the configuration of a communication terminal apparatus in accordance with the embodiment of the present invention.

Best Mode for Carrying Out the Invention

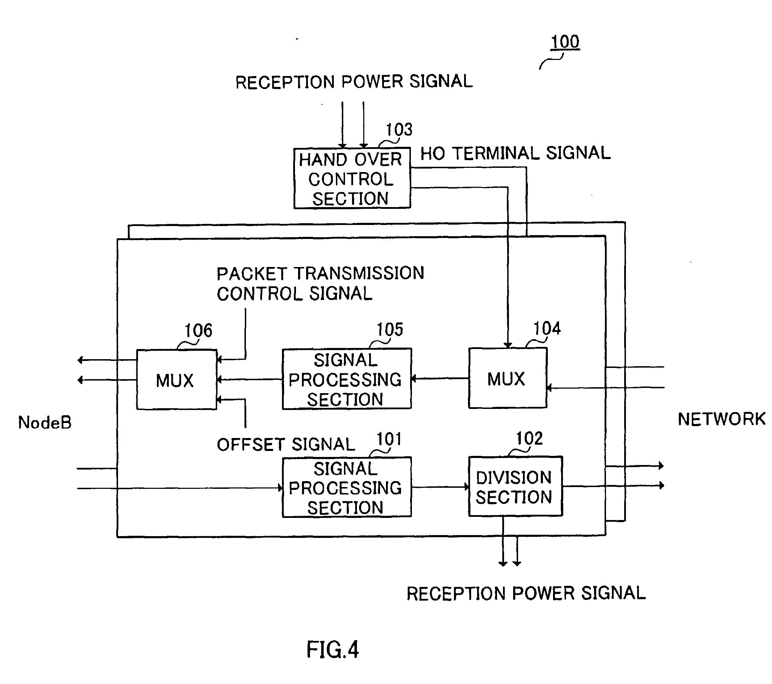

An embodiment of the present invention will be explained below with reference to the accompanying drawings.

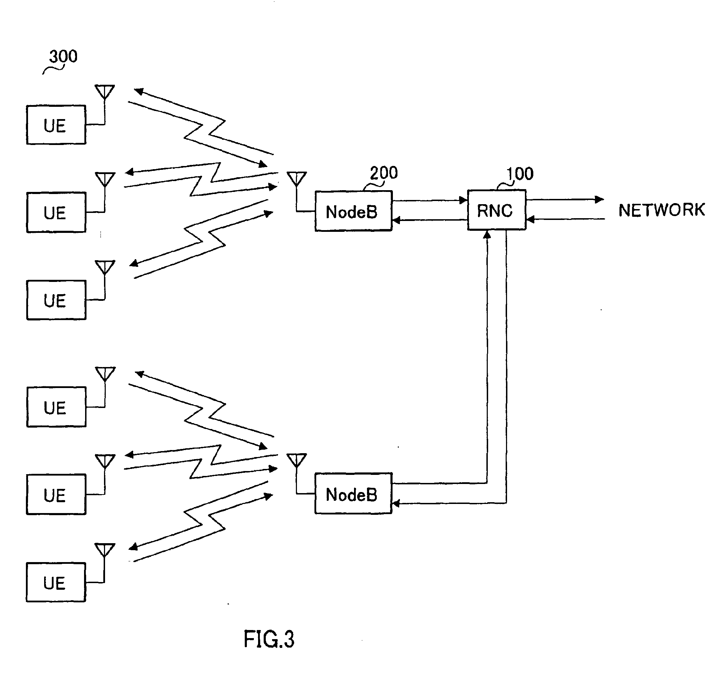

FIG.3 is a system configuration diagram showing an embodiment of the present invention.
In FIG.3, a radio network control station (RNC) 100 is wire-connected to a plurality of base station apparatuses (Node B) 200, and each base station apparatus 200 provides wireless communication services for a plurality of communication terminal apparatuses (UE) 300.
Incidentally, in the following explanation, it is assumed that the radio network control station apparatus 100 is wire-connected with two base station apparatuses 200, each of which is in wireless communication with three communication terminal apparatuses 300.
Next, the configuration of the radio network control station apparatus 100 will be explained with reference to FIG.4.
Signal processing sections 101, provided in the number of the base station apparatuses to communicate with, receive signals transmitted from the communication terminal apparatus 300 and decoded by the base station apparatuses 200, process these signals according to an appropriate format for transmission in the network, and output the processed signals to division sections 102.
The division sections 102, provided in the number of the base station apparatuses to communicate with, divide the output signals of the signal processing section 101 into data and control signals. The data is outputted to the network. The control signals as separated from the data by the division section 102 include a signal (hereinafter referred to as a "reception power signal") indicative of the reception power of the shared control channel of a neighboring base station apparatuses as measured by a communication terminal apparatus 300.
The hand over control section 103 determines whether or not the HO control is to be taken for the communication terminal apparatuses and outputs the signal indicative of the determination result (hereinafter referred to as an "HO terminal signal") to multiplexer sections (MUX) 104.
The multiplexer sections 104, provided in the number of the base station apparatuses to communicate with, multiplex the input signals from the network and the HO terminal signals and output the multiplexed signal to the signal processing sections 105. The signal processing section 105, provided in the number of the base station apparatuses to communicate with, process the output signals of the multiplexer sections 104 in an appropriate format for transmission from the base station apparatuses, and output them to the multiplexer sections 106.

The multiplexer sections 106, provided in the number of the base station apparatuses to communicate with multiplex, on the output signal of the signal processing section 105, packet transmission control signals and the offset signals indicative of the offset value of the transmission power of the HS-SCCH relative to the transmission power of the A-DPCH, and output them to the base station apparatuses 200.

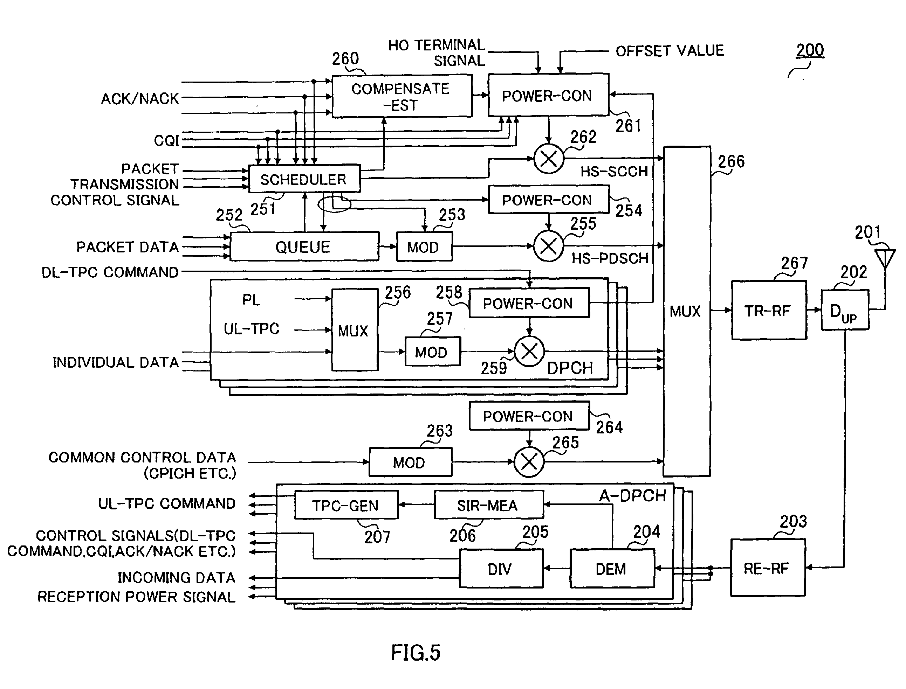

Next, the configuration of the base station apparatus 200 will be explained with reference to the block diagram of FIG.5.

The base station apparatus 200 receives individual data, packet data, HO terminal signals, packet transmission control signals, and offset signals from the control station apparatus 100. On the other hand, the base station apparatus 200 receives signals wireless transmitted from a communicating communication terminal apparatus.

A duplexer 202 outputs the signals received by the antenna 201 to the reception RF section (RE-RF) 203. Also, the duplexer 202 wireless transmits the signals outputted from the transmission RF section (TR-RF) 267 through the antenna 201.

The reception RF section 203 converts the received signals in radio frequency outputted from the duplexer 202 into digital signals in the baseband frequency, and output them to demodulating sections (DEM) 204.

The demodulating sections 204, provided in the number of the base station apparatuses to communicate with, demodulate the reception baseband signal through de-spreading, RAKE combination, error correction decoding and so forth, and output the demodulated signals to the division section (DIV) 205.

The division section 205 divides the output signal of the demodulating section 204 into data and control signals.

The control signals separated by the division section 205 include a DL (Down Link)-TPC command, a CQI signal, an ACK/NACK signal, a reception power signal and so forth. The CQI signal and the ACK/NACK signal are outputted to a scheduler 251, a compensation value setting section (COMPENSATE-EST) 260, and a transmission power control section (POWER-CON) 258. The DL-TPC command is outputted to the transmission power control section (POWER-CON) 258. The data and the reception power signals are outputted to the radio network control station apparatus 100.

SIR measuring sections (SIR-MEA) 206, provided in the number of the base station apparatuses to communicate with, measure the reception SIR of the uplink channels with reference to the desired wave level of and the interference wave level measured during the demodulation, and output the signal indicative of the SIR to the TPC command generating sections (TPC-GEN) 207.

The TPC command generating sections 207, provided in the number of the base station apparatuses to communicate with, generate an UL (Up Link)-TPC command instructing the increase or decrease in the transmission power of an uplink channel based on the magnitude relation between the reception SIR and the target SIR of the uplink channel.

The scheduler 251 determines a communication terminal apparatus as a destination of packets (hereinafter referred to as "destination apparatus") based on the CQI signals and the packet transmission control signals from the communication terminal apparatuses, and outputs the information indicative of the destination apparatus to a buffer (QUEUE) 252. At this time, the scheduler 251 instructs the buffer 252 to transmit next data when receiving an ACK signal, and instructs the buffer 252 to retransmit the previous data when receiving an NACK signal. Also, the scheduler 251 determines a modulation scheme and an encoding rate based on the CQI signal from the destination apparatus and provides a modulator section 253 with instructions. Furthermore, the scheduler 251 outputs a signal as a reference for use in determining the transmission power of packet data to a transmission power control section (POWER-CON) 254. Incidentally, the present invention sets no limitation on the transmission power control method and stands without a transmission power control of packet data. Also, the scheduler 251 outputs, to an amplifying section 262, signals (referred to herein as "HS-SCCH signals" to be transmitted to the destination apparatus on the HS-SCCH. The HS-SCCH signals include the information (TFRI) indicative of the timing of transmitting packet data, and the encoding rate and modulation scheme for the packet data. Also, the scheduler 251 outputs retransmission information indicative of retransmission to the compensation value setting section 260.

The buffer 252 outputs the packet data for the destination apparatus as instructed by the scheduler 251 to the modulator section (MOD) 253.

The modulator section 253 outputs the packet data after error correction coding, modulation, and spreading in accordance with the instruction by the scheduler 251 to the amplifying section 255.

The transmission power control section 254 controls the transmission power of the output signals of the modulator section 253 by controlling the gain of the amplifying section 255. The output signal of the amplifying section 255 is a signal to be transmitted on the HS-PDSCH and is outputted to the multiplexer section (MUX) 266.

Multiplexer sections (MUX) 256, provided in the number of the base station apparatuses to communicate with, multiplex a pilot signal and a UL-TPC command with the individual data (including control signals) to be transmitted to the communication terminal apparatus, and output the multiplexed signal to the modulator sections (MOD) 257.

The modulator section 257, provided in the number of the base station apparatuses to communicate with, output the output signal of the multiplexer section 256 after error correction coding, modulation, and spreading to amplifying sections 259.

The transmission power control sections 258, provided in the number of the base station apparatuses to communicate with, control the transmission power of the output signals of the modulator sections 257 by controlling the gains of the amplifying sections 259 in accordance with the DL-TPC commands. Also, the transmission power control section 258 outputs a signal indicative of the transmission power to the transmission power control section 261.

The signal amplified by the amplifying section 259 is a signal to be transmitted on the DPCH (inclusive of A-DPCH), and is outputted to the multiplexer section 266.

The compensation value setting section 260 determines the compensation value of the transmission power of an HS-SCCH based on the retransmission state and the ACK/NACK signal, and outputs the compensation value to the transmission power control section 261.

When the destination apparatus is not in an HO state, the transmission power control section 261 controls the gain of the amplifying section 262 by adding an offset to the transmission power of the transmission power control section 258. Contrary to this, when the destination apparatus is in an HO state, the transmission power control section 261 controls the gain of the amplifying section 262 based on the CQI signal. In this case, it is thought that the transmission power control section 261 is designed to set the transmission power of the HS-SCCH for retransmission higher than that for the first time transmission by adding the compensation value of the compensation value setting section 260. Also, when no ACK/NACK signal is received in response to HS-SCCH transmission to a communication terminal apparatus and a retransmission follows, it is determined that the HS-SCCH signal is not correctly received, and, only then, is the transmission power for retransmission on the HS-SCCH set higher than that for the first transmission. Furthermore, the compensation value is set higher as the retransmission time increases. By this configuration, it is possible to reduce the number of retransmissions resulting from erroneous reception of the HS-SCCH signal.

Furthermore, the transmission power control section 261 performs an outer loop control by adding the compensation value inputted from the compensation value setting section 260 to the transmission power as set. Since the transmission power control section 261 controls the transmission power through the outer loop control, it is possible to compensate the transmission power of the HS-SCCH not only upon a retransmission but also upon the first transmission, and improve the throughput by reducing the number of retransmissions. Meanwhile, the details of the outer loop control will be described later.

The transmission power of the HS-SCCH signal outputted from the scheduler 251 is controlled by controlling the gain of the amplifying section 262.

The signal amplified by the amplifying section 262 is a signal to be transmitted on the HS-SCCH, and is outputted to the multiplexer section 266.

The modulator section (MOD) 263 outputs shared control data to the amplifying section 265 after error correction coding, modulation, and spreading. The transmission power control section 264 controls the transmission power of the output signals of the modulator section 263 by controlling the gain of the amplifying section 265. The output signal of the amplifying section 265 is a signal to be transmitted on the CPICH and so forth, and is outputted to the multiplexer section 266.

The multiplexer section 266 multiplexes the output signals of the amplifying section 255, the amplifying section 259, the amplifying section 262 and the amplifying section 265, and outputs the multiplexed signal to the transmission RF section 267.

The transmission RF section 267 converts the digital signals in the baseband frequency outputted from the modulator section 263 into signals in radio frequency, and outputs the converted signals to the duplexer 202.

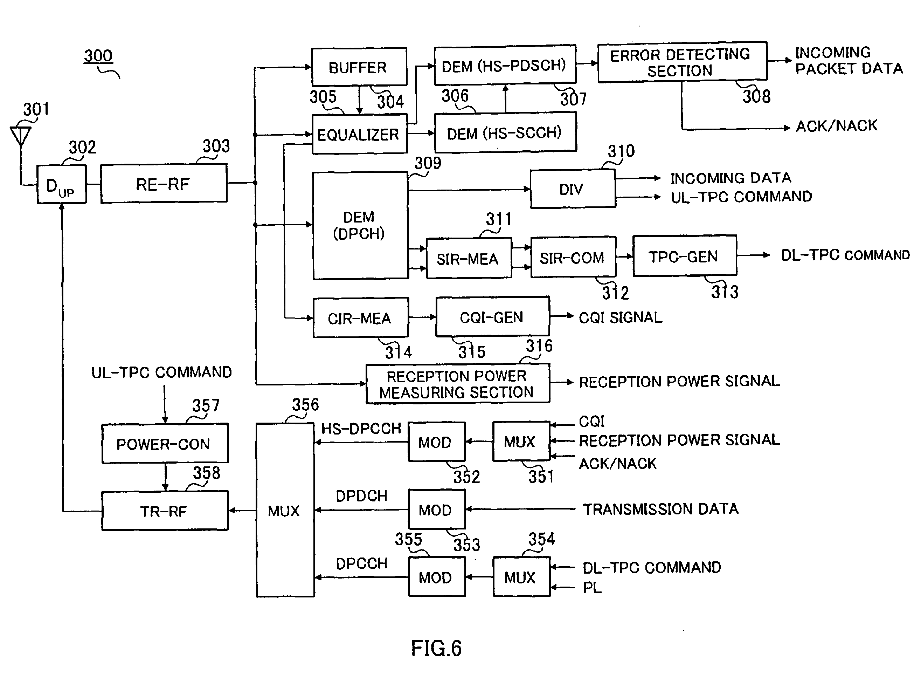

Next, the configuration of the communication terminal apparatus 300 will be explained with reference to the block diagram shown in FIG.6. The communication terminal apparatus 300 receives individual data, shared control data, packet data and an HS-SCCH signal from the base station apparatus 200.

A duplexer 302 outputs the signals received by the antenna 301 to a reception RF section (RE-RF) 303. Also, the duplexer 302 wireless transmits the signals outputted from a transmission RF section (TR-RF) 358.

The reception RF section 303 converts the signals outputted from the duplexer 302 into digital signals in the baseband frequency, outputs the received signals to the buffer 304, outputs the HS-SCCH signal to an equalizer 305, and outputs the signals on the A-DPCH to a demodulating section 309.

The buffer 304 temporarily stores the received signals and outputs them to the equalizer 305.

The equalizer 305, also called an adaptive equalizer, is a measure against frequency selective fading and is effective to reduce the performance degradation of signal reception due to delayed waves in a multi-valued modulation waves such as by 16 QAM. The equalizer 305 outputs the HS-PDSCH signal after equalization to the demodulating section (DEM) 307, outputs the HS-SCCH signal to the demodulating section (DEM) 306, and outputs the signal on the shared control channel to CIR (Carrier to Interference Ratio) measuring section (CIR-MEA) 314 and a reception power measuring section 316.

Meanwhile, the CQI signal is generated based on the result of measuring the CIR of the signal on the shared control channel after processing data by the equalizer. This is because the CQI signal is reported in consideration of the reception performance (reception gain) of the equalizer for receiving HS-PDSCH signals. In this case, if the HS-SCCH signal is received by usual de-spreading and RAKE combination, it is difficult at the terminal to satisfy the required SIR of the HS-SCCH signal transmitted under the transmission power control based on the CQI signal taking into consideration the reception performance (reception gain) of the equalizer as described above. Accordingly, when the base station apparatus 200 controls the transmission power of the HS-SCCH based on the CQI signal, the communication terminal apparatus 300 has to use the equalizer also for performing the reception processing of the HS-SCCH. By this configuration, even if the base station apparatus 200 controls the transmission power of the HS-SCCH based on the CQI signal, the communication terminal apparatus 300 can correctly decode the HS-SCCH signal.

Incidentally, it is apparent that the above description is true in the case where another high performance receiver (other than RAKE combination) such as an interference canceller is used in place of the equalizer.

The demodulating section 306 performs the demodulation process of the HS-SCCH signal such as error correction decoding, obtains the information required for decoding the packet data for the own station such as the incoming timing of the packet data, the encoding rate and modulation scheme of the packet data, and outputs the information to the demodulating section 307.

Also, in the case of a communication terminal apparatus without a high performance receiver such as an equalizer, the demodulating section 306 receives the HS-SCCH signal outputted from the reception RF section 303 by usual de-spreading and RAKE combination.

The demodulating section 307 demodulates the HS-PDSCH signal stored in the buffer based on the information obtained by the demodulating section 306 by error correction decoding and the like, and outputs the demodulated packet data to the error detecting section 308.

The error detecting section 308 performs error detection of the packet data outputted from the demodulating section 307, and outputs to a multiplexer section (MUX) 351 an ACK signal if no error is detected or a NACK signal if an error is detected.

The demodulating section (DEM) 309 demodulates the DPCH signal by de-spreading, RAKE combination, error correction decoding and so forth, and outputs the demodulated signal to a division section (DIV) 310.

The division section 310 divides the output signal of the demodulating section 309 into data and control signals. The control signals separated by the division section 310 include an UP-TPC command and so forth. The UP-TPC command is outputted to a transmission power control section (POWER-CON) 357.

The SIR measuring section (SIR-MEA) 311 measures, for each base station apparatus to communicate with, the reception SIR of the downlink channels with reference to the level of desired waves and the level of interference waves as measured during the demodulation, and outputs all the SIRS measured to an SIR combination section (SIR-COM) 312. The SIR combination section 312 combines the reception SIRs and outputs the combined value to a TPC command generating section 313. The TPC command generating section (TPC-GEN) 313 generates a DL-TPC command based on the magnitude relation between the target SIR and the reception SIR outputted from the SIR combination section 312, and outputs the DL-TPC command to the multiplexer section (MUX) 354.

The CIR measuring section 314 measures the CIR by the use of the signal on the shared control channel from the primary base station apparatus, and outputs the measurement result to the CQI generating section (CQI-GEN) 315. The CQI generating section 315 generates a CQI signal based on the CIR signal as transmitted from the primary base station apparatus, and outputs the CQI signal to the multiplexer section 351.

The reception power measuring section 316 measures the reception power corresponding to the reception power of the shared control channel from the neighboring base station apparatuses other than the primary base station apparatus, and outputs the reception power signal to the multiplexer section 351.

The multiplexer section 351 multiplexes the CQI signal, the reception power signal and ACK/NACK signals, and outputs the multiplexed signal to the modulator section (MOD) 352. The modulator section 352 performs error correction coding, modulation, and spreading of the output signal of the multiplexer section 351, and outputs the signal to the multiplexer section (MUX) 356.

The modulator section (MOD) 353 performs error correction coding, modulation, and spreading of the data to be transmitted to the base station apparatus 200, and outputs the data to the multiplexer section 356.

The multiplexer section 354 multiplexes the DL-TPC command and the pilot signal, and outputs the multiplexed signal to the modulator section (MOD) 355. The modulator section 355 performs error correction coding, modulation, and spreading of the output signal of the multiplexer section 354, and outputs the signal to the multiplexer section 356.

The multiplexer section 356 multiplexes the output signals of the modulator section 352, the modulator section 353 and the modulator section 355, and outputs the signals to the transmission RF section 358.

The transmission power control section 357 controls the transmission power of the output signal of the multiplexer section 356 by controlling the gain of the transmission RF section 358 in accordance with the UL-TPC command. Incidentally, in the case where a plurality of base station apparatuses are communicating, the transmission power control section 357 controls the transmission power to increase only when all the UL-TPC commands request the increase of the transmission power.

The transmission RF section 358 amplifies and converts the digital signals in the baseband frequency as outputted fromthemultiplexer section 356 into a signal in radio frequency, and outputs the radio frequency signal to the duplexer 302.

Next, the setting method of the compensation value and the calculation method of the transmission power under the outer loop control will be explained in detail.

The transmission power control section 261 performs the outer loop control of the transmission power by adding the compensation value, which is set by the compensation value setting section 260, to the transmission power.

However, based on the retransmission information alone, the compensation value setting section 260 is unable to determine, whether the retransmission is requested by a NACK signal because, although the HS-SCCH signal is correctly received, the HS-PDSCH signal as packet data is not correctly received, or the retransmission occurs because the HS-SCCH signal is not correctly received and as a result the HS-PDSCH signal is not correctly received either. Accordingly, the retransmission information alone is insufficient for performing the outer loop control of the transmission power of the HS-SCCH inclusive of the transmission power of the first transmission. For example, in the case where no ACK/NACK signal data is received in response to transmission to a terminal on the HS-SCCH and a follows, it is determined that the retransmission is likely to have occurred because the HS-SCCH signal is not received correctly. Accordingly, if the frequency of occurrence thereof is high, the compensation value setting section 260 increases the compensation value of the transmission power of the HS-SCCH which is set based on the CQI signal (reported value). By this configuration, it is possible to perform the outer loop control of the transmission power of the HS-SCCH inclusive of the transmission power of the first transmission. Also, the compensation value setting section 260 increases the compensation value as the number of retransmissions increases.

Meanwhile, there are two different methods for performing the outer loop control, i.e., a method of individually controlling the communication terminal apparatuses and a method of collectively controlling all the communication terminal apparatuses. In the method of individually controlling the communication terminal apparatuses, it is possible to perform the control operation in accordance with the channel status (multipath, the moving speed and the like) of the communication terminal apparatuses, and maximize the improvement of the throughput with each terminal. On the other hand, in the method of collectively controlling all the communication terminal apparatuses, it is possible to perform the compensation based on the conditions of the channels (the number of multipath and the like) specific to the location of the base station apparatus and the like, and in addition to this, reduce the amount of processing required of the outer loop control as compared with the method of individually controlling the communication terminal apparatuses.

Next, the calculation method of the transmission power of the transmission power control section 261 will be explained in detail.

When the destination apparatus is not in an HO state, the transmission power of the HS-SCCH is calculated by the transmission power control section 261 in accordance with equation (1) below:

$$\text{PHS-SCCH= PA-DPCH + offset value + (adjustment value}$$

$$\text{1) + (adjustment value 2)} \tag{1}$$

In equation (1);
PHS-SCCH: the transmission power of the A-DPCH of the HS-SCCH;
PA-DPCH: the transmission power of the terminal;
offset value: the offset value of the transmission power of the A-DPCH as designated by the upper system;
adjustment value 1: the compensation value to be added by the outer loop control (there are two methods, i.e., user specific compensation and collectively applicable compensation); and
adjustment value 2: the compensation value to be added by the retransmission control.

Meanwhile, since the PA-DPCH varies from slot to slot, the PHS-SCCH also varies from slot to slot.

Also, when the destination apparatus is in an HO state, the transmission power control section 261 calculates the transmission power of the HS-SCCH in accordance with equation (2) below:

$$\text{PHS-SCCH (CQI)} = f\,(\text{CQI}) + (\text{adjustment value1}) +$$

$$(\text{adjustment value 2}) \qquad (2)$$

In equation (2);
PHS-SCCH: the transmission power of the HS-SCCH;
$f\,(x)$ : the function indicative of the transmission power (the default in advance of the compensation) of the HS-SCCH corresponding to the reported value x of the CQI signal from the terminal;
adjustment value: the compensation value to be added by the outer loop control (there are two methods, i.e., user specific compensation and collectively applicable compensation); and
adjustment value 2: the compensation value to be added by the retransmission control.

Meanwhile, in the case where the PHS-SCCH is controlled by switching the A-DPCH base control and the CQI base control in accordance with the HO state, the compensation of the outer loop control (adjustment value 1) can be independently controlled.

At least when an HO state occurs, the reception power of the HS-SCCH is set at the base station apparatus based on the CQI signal so as to achieve the required SIR for the transmission power of the HS-SCCH, and therefore it is possible to improve the system throughput of the wireless communication system providing an HSDPA service without decreasing the frequency utilization.

In addition, the communication terminal apparatus can operate in the conventional manner in controlling the transmission power of the downlink on the A-DPCH, and therefore there is no need for additional implementation to the communication terminal apparatus in this regard.

Also, since the existing CQI signal is used for controlling the transmission power of the HS-SCCH, there is no need for a new control signal in the base station apparatus for communicating with terminals. Since the M-ary number of the CQI signal is small in general, it is possible to receive data with high quality and therefore perform the transmission power control with a high degree of precision by the use of the signal. Also, a CQI signal is transmitted to the base station apparatus from the communication terminal apparatus whenever an HS-SCCH signal is transmitted just before transmitting an HS-PDSCH signal.

Also, the measurement object of the CIR measurement of the shared control channel has a higher quality than that of the SIR measurement for controlling the TPC command of the A-DPCH and is measured with higher accuracy.

Also, since the transmission power control of the A-DPCH is implemented with the operating assumption of transmission in frames no shorter than 10 msec, the present invention is considered more suitable for controlling the transmission power for transmitting HS-SCCH signals having shorter frame lengths.

Alternatively, in the case of the present invention, the gain of the amplifying section 262 can be constantly controlled by the transmission power control section 261 based on the CQI signal regardless whether or not the communication terminal apparatus is in a hand over state. Also, the method of controlling the transmission power of the HS-SCCH can be switched in response to the instruction as a switching signal directly transmitted from the radio network control station apparatus 100 which is an upper station. Alternatively, the base station apparatus 200 autonomously determines the method based on the HO terminal signal generated by the control station apparatus 100.

Also, the transmission power of the HS-SCCH can be controlled based on the last inputted CQI signal or based on a plurality of previously inputted CQI signals.

Furthermore, the CQI signal for use can be selected circumstantially, e.g., a plurality of previously inputted CQI signals used for controlling in the case where the moving speed of the communication terminal apparatus is measured to be low, or the last inputted CQI signal used for controlling in the case where the moving speed is measured to be high. This can be implemented by providing a moving speed detecting section in the base station apparatus as illustrated for example in FIG.5, measuring the moving speed of the communication terminal apparatus based on the output signal of the demodulating section 204, and outputting speed information corresponding to the measurement result to the scheduler 251 and the transmission power control section 261.

In particular, provided that when the moving speed is low, the propagation environment does not change substantially over a period of receiving and transmitting a plurality of CQI signals, it is possible to implement a more reliable transmission power control of the HS-SCCH and improve the throughout of packet data by controlling the transmission power based on average propagation path information from a plurality of previously inputted CQI signals or based on propagation path prediction.

Meanwhile, while the technical terms in the field of W-CDMA systems are used for ease of explanation, the present invention is not limited to W-CDMA systems and is applicable to other systems performing the packet transmission on downlink channels. Furthermore, the present invention is not limited to the above channels and is applicable to the systems simultaneously using SHO channels and HHO channels by switching the TPC command generating method of the SHO channels.

As apparent from the above explanation, in accordance with the present invention, the reception power of the HS-SCCH can be controlled to achieve the required SIR constantly, and therefore it is possible to improve the system throughput of the wireless communication system providing HSDPA services.

The present specification is based on Japanese Patent Application No. 2002-189875 filed on June 28, 2002, entire content of which is incorporated herein by reference.

Industrial Applicability

The present invention is suitable for use in wireless communication systems enabling high speed transmission of downlink packets.

**Claims**

1. A transmission power control method, wherein a base station apparatus determines whether or not a communication terminal apparatus receiving an HSDPA service is in a hand over state, and controls a transmission power of an HS-SCCH with respect to the communication terminal apparatus based on a CQI signal when said communication terminal apparatus is in the hand over state.

2. The transmission power control method according to claim 1, wherein, when the base station apparatus fails to receive a signal indicating a demodulation result of a reception packet from the communication terminal apparatus, the base station apparatus performs an outer loop control.

3. The transmission power control method according to claim 1, wherein, the base station apparatus sets a compensation value for the transmission power of the HS-SCCH upon a retransmission, and controls the transmission power with a sum value of a calculated transmission power and said compensation value.

4. The transmission power control method according to claim 3, wherein the base station apparatus sets a higher compensation value as the number of retransmissions increases.

5. The transmission power control method according to claim 1, wherein the base station apparatus performs the transmission power control of the HS-SCCH based on a plurality of previously inputted CQI signals when a moving speed of the communication terminal apparatus is low, and based on a last inputted CQI signal when the moving speed is high.

6. A base station apparatus comprising:

   a scheduler that determines a communication terminal apparatus as a destination of a packet based on a CQI signal, and generates a signal to transmit on an HS-SCCH; and
   a transmission power control section that determines whether or not a communication terminal apparatus receiving an HSDPA service is in a hand over state, and controls a transmission power of the HS-SCCH with respect to the communication terminal apparatus based on a CQI signal when said communication terminal apparatus is in a hand over state.

7. The base station apparatus according to claim 6, further comprising a compensation value setting section that sets a compensation value for the transmission power of the HS-SCCH, wherein, when the transmission power control section fails to receive a signal indicating a demodulation result of a reception packet from the communication terminal apparatus, the transmission power control section performs an outer loop control with a sum value of a calculated transmission power and said compensation value.

8. The base station apparatus according to claim 6, further comprising a compensation value setting section that sets a compensation value of the transmission power of an HS-SCCH upon a retransmission, wherein the transmission power control section controls the transmission power with a sum value of a calculated transmission power and said compensation value.

9. The base station apparatus according to claim 8, wherein the compensation value setting section sets a higher compensation value as the number of retransmissions increases.

**10.** The base station apparatus according to claim 6, wherein the transmission power control section makes the number of samples for the CQI signal for use in performing the transmission power control of the HS-SCCH adjustable in accordance with a moving speed of a communication terminal apparatus.

**11.** The base station apparatus according to claim 10, wherein the transmission power control section performs the transmission power control of the HS-SCCH based on a plurality of previously inputted CQI signals when the moving speed of the communication terminal apparatus is low, and based on a last inputted CQI signal when said moving speed is high.

FIG.1

TRANSMISSION
POSER

SIR

42: HS-SCCH REQUIRED SIR

41

33

34: A-DPCH TARGET SIR

31

32

TIME

FIG.2

EP 1 519 496 A1

EP 1 519 496 A1

300

UE

UE

UE

UE

UE

UE

200

NodeB

100

RNC

NETWORK

NodeB

FIG.3

RECEPTION POWER SIGNAL

100

103

HAND OVER CONTROL SECTION

HO TERMINAL SIGNAL

NETWORK

104

MUX

105

SIGNAL PROCESSING SECTION

PACKET TRANSMISSION CONTROL SIGNAL

106

MUX

NodeB

102

DIVISION SECTION

101

SIGNAL PROCESSING SECTION

OFFSET SIGNAL

RECEPTION POWER SIGNAL

FIG.4

FIG.5

EP 1 519 496 A1

FIG.6

**INTERNATIONAL SEARCH REPORT**

| International application No. |
| --- |
| PCT/JP03/07955 |

A. CLASSIFICATION OF SUBJECT MATTER
   Int.Cl⁷ H04B7/26

According to International Patent Classification (IPC) or to both national classification and IPC

B. FIELDS SEARCHED

Minimum documentation searched (classification system followed by classification symbols)
   Int.Cl⁷ H04B7/24-7/26, H04L1/16, H04Q7/00-7/38, H04L12/54-12/56

Documentation searched other than minimum documentation to the extent that such documents are included in the fields searched
   Jitsuyo Shinan Koho          1922-1996   Toroku Jitsuyo Shinan Koho   1994-2003
   Kokai Jitsuyo Shinan Koho    1971-2003   Jitsuyo Shinan Toroku Koho   1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 00/03495 A1 (QUALCOMM INC.), 20 January, 2000 (20.01.00), Full text; Figs. 1 to 18 & AU 9950966 A          & EP 1097524 A1 & US 6275478 A         & US 2001/0017848 A1 & KR 2001071847 A      & CN 1320307 A & TW 453058 A          & JP 2002-520943 A | 1-11 |
| A | Nobuhiko MIKI et al., "W-CDMA Kudari Link Kosoku Packet Denso ni Okeru Hybrid ARQ no Tokusei", The Institute of Electronics, Information and Communication Engineers Gijutsu Hokoku, 06 October, 2000 (06.10.00), Vol.100, No.346, RCS 2000-135, pages 53 to 58 | 1-11 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 September, 2003 (16.09.03) | 30 September, 2003 (30.09.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

17

**INTERNATIONAL SEARCH REPORT**

International application No.

PCT/JP03/07955

C (Continuation).   DOCUMENTS CONSIDERED TO BE RELEVANT

| Category* | Citation of document, with indication, where appropriate, of the relevant passages | Relevant to claim No. |
|---|---|---|
| E,A | JP 2002-330461 A  (NEC Corp.),<br>15 November, 2002 (15.11.02),<br>Full text; Figs. 1 to 12<br>& EP 1239689 A2          & US 2002/0147015 A1<br>& CN 1373620 A          & KR 2002070888 A | 1-11 |

Form PCT/ISA/210 (continuation of second sheet) (July 1998)